# EUROPEAN PATENT SPECIFICATION

(11) **EP 1 020 114 B1**
(45) Date of publication and mention of the grant of the patent: **10.08.2005**
(21) Application number: 98830812.8
(22) Date of filing: 31.12.1998
(51) Int. Cl.: A01N 3/00

(54) **Method of preserving endemic germ plasm (vegetable resources) by using stationary and mobile, in situ and ex situ "seed banks"**
Verfahren zum Konservieren von endemischem Keimplasma (pflanzlichen Ursprungs) unter Verwendung stationärer und mobiler in situ und ex situ "Saatbanken"
Procédé pour la préservation de germes-plasma endémiques (d'origines végétales) utilisant des banques de semences stationnaires et mobiles, in situ et ex situ

(43) Date of publication of application: 19.07.2000
(73) Proprietor: De Simone, Sergio Maria, 85100 Potenza (IT); CODRA MEDITERRANEA S.r.l., 85010 Pignola (PZ) (IT)
(72) Inventor: De Simone, Sergio Maria, 85100 Potenza (IT)
(74) Representative: Sarpi, Maurizio

(56) References cited:
- EP-A- 0 490 744
- EP-A- 0 736 494
- EP-A- 0 815 715
- DE-A- 2 922 146
- GB-A- 341 484
- GB-A- 2 325 611
- DATABASE CABA STN-International STN-accession no. 97:91464, E.O GUERRANT ET AL.: "Ex situ conservation and the Berry Botanic Garden" XP002104619 & CONSERVATION AND MANAGEMENT OF NATIVE PLANTS AND FUNGI. PROCEEDINGS OF THE OREGON CONFERENCE ON THE CONSERVATION AND MANAGEMENT OF NATIVE VASCULAR PLANTS, BRYOPHYTES, AND FUNGI,1997, pages 105-118,
- DATABASE CABA STN-International STN-accession no. 95:153847, R.CUNHA ET AL.: "Germination and desiccation studies on wild nutmeg seed (Virola surinamensis)" XP002104620 & SEED SCIENCE AND TECHNOLOGY, vol. 23, no. 1, 1995, pages 43-49,
- BIOLOGICAL ABSTRACTS, vol. 1998, Philadelphia, PA, US; abstract no. 70170, J.M.PITA ET AL.: "Viability of Avena sativa L. seeds after 10 years of storage in base collection" XP002104618 & FIELD CROP RESEARCH, vol. 55, no. 1-1, January 1998, pages 183-187,
- DATABASE CABA STN-International STN-accession no.89:37677, V.A.ZAITSEV: "Current strategy for the conservation of germplasm of world plant resources" XP002104621 & SBORNIK NAUCHNYKH TRUDOV PO PRIKLADNOI BOTANIKE, GENETIKE I SELEKTSII, vol. 100, 1987, pages 260-269,
- DATABASE CABA STN-International STN-accession no. 81:135520, L.N.BASS: "Flower seed storage" XP002104622 & SEED SCIENCE & TECHNOLOGY, vol. 8, no. 4, 1980, pages 591-599,
- DATABASE CABA STN-International STN-accession no., V.G.DORONIN: "Maintenance of the viability of seeds of Solanum triflorum in the soil" XP002104623 & NAUCHNO-TEKHNICHESKII BYULLETEN', RASKI SIBIRSKOE OTDELENIE: SIBIRSKII NAUCHNO-ISSLEDOVATEL'SKII INSTITUT SEL'SKOGO KHOZYAISTVA, no. 5, 1991, pages 15-20,

## Description

The present invention relates to the environmental restoration and more particularly solves the problem of providing strictly autochthonous vegetables ready to use for constructing/reconstructing degraded environments and more generally the countryside.

According to the invention a method is provided that allows endemic vegetables to be used at any time by suppressing the factors that inhibit germination and development through the control of latency, dormancy, and dominance.

Since the future of agriculture and environment is bound to the conservation of the biological diversity, the present invention aims at permitting such diversity to be preserved by opposing the rate of reduction of the vegetable seed viability and allowing such vegetable to be readily used through the control of the biochemical factors inhibiting germination and development.

The natural consequence is to extend the life of the vegetal essences so that the latter can be used in situ and ex situ, if necessary, or made available where they are not present in as many quantities and qualities as enough for performing the interventions.

The problems connected to the environment preservation and restoration are of great topical interest.

The destruction of the vegetable population caused by man and other not anthropical factors along with the multiplication just of some types of vegetables (the most convenient from the economic standpoint) has involved the progressive reduction and, in some cases, the disappearance of several species and ecotypes.

Therefore, the regression of spontaneous flora has reached worrying levels all over the world. The natural causes, above all the anthropical causes, due to the manipulation of man whose prevailing care is and has always been to replace diversity by homogeneity in agriculture, breeding, and sylviculture, have brought to the impoverishment of the vegetal and animal species.

It should be noted that forty thousand vegetal species risk their extinction in the next 50 years, which is to say that there is to exist the legitimate possibility of losing a quarter of the biological diversity of the earth in the space of a generation.

Plants existing today and those conserved are the result of 3,000 million years of evolution and 12,000 years of cultivation and selection, however, only 15-20 plants have an economic importance and are prevailingly used by man and generally pertain to his activity. Since 1900 about 75% of the genetic diversity of these plants has to be considered as lost in spite of the efforts of the European Union and its member countries to tackle the problem of the reduction or loss of the biological diversity. The existing measures are not enough to allow an inversion of the tendency (Line 92/43/EEC of the Council of 05/21/92 relating to the Conservation of Natural and Semi-Natural Habitat of Wild Flora and Fauna; Resolution of the Council of 10/25/93 relating to the conclusions of the Convention about the Biological Diversity 93/626/EEC, Convention about the Conservation of Wildlife and Nature in Europe, etc.).

The absence or the reduced presence of autochthonous germ plasm in Italy and the member countries of the European Community implied considerable imports of non-autochthonous germ plasm both to Italy and the other countries of the Community from foreign countries for the purpose of increasing and restoring the forest heritage. If such a situation may be considered as legitimate from the economic standpoint, certainly it is not as such from an ecological, technical standpoint.

The arboreal, shrubby, herbaceous species of different geographic areas have become different in the space of millenia of evolution: sometimes races and subspecies have been formed; more often the local populations have been distinguished in ecotypes with a determined genetic set which is connected to the local environmental conditions.

In other words, a species within the great geographic area where it grows spontaneously has created local ecological races responsive to the local environmental conditions.

The importation of not autochthonous seeds, plants and parts thereof for their use implies the production of genetic-ecological pollution caused by dangerous parasites that find favourable development conditions and attack and in some cases decimate the vegetal species so that the gravity of the phenomenon has induced the Italian law-maker and the one of the Community to take severe measures regarding both the plant protection from the serious consequences of the pollution and the restrictions to importation and transit of vegetables from foreign countries, above all not European countries (Italy, law of June 18, 1987 and relative Regulations of Application, Royal Decree of October 12, 1933, No. 1700, Decree of Ministry of Agriculture and Forestry of February 10, 1990 regarding "Plant Protection Rules Relative to the Import, Export, and Transit of Vegetable Products).

The use of not autochthonous vegetables for increasing and restoring the forest heritage is causing and will cause undesired hybridizations and cross-breedings that will be able to cause the disappearance of the local ecotypes in the long run. As the latter are the manifestation of the biological diversity, their disappearance will clearly involve heavy losses of such diversity.

Considering that the development of the environment is guaranteed only by the use of endemic vegetable products that allow the growth processes of interacting systems to be harmonized, said systems become more and more complex as far as the space-time ratio is concerned only when autochthonous vegetables are used so that the biological diversity is enhanced in its multiple aspects, namely:
- the species aspect which is essentially represented by an evaluation of the genetic diversities among populations and individuals;
- the community-ecosystem aspect considering the biological diversity as a form of guarantee against the loss of the species or the reduction of the functional capacity of the system;
- the countryside aspect which is dynamically considered as the result of matter and energy flow, accumulation of biomass, flow of nutrients and water.

Other preserving method are known in the state of the art as the one described in the European Patent Application No. EP 0 490 744. However, the method discloses in the above mentioned application is specifically designed only for preservation of fresh cut flowers or plant cuttings.

One object of the present invention is to solve the above-mentioned problems by providing a method for treating the germ plasm where physical-chemical means are used to control the germination and the following development by conditioning epinasty, geotropism, gravimorphism and, more generally, the control memory of vegetal systems.

Another object of the invention is to protect the biological diversity of the vegetables and to guarantee its preservation by keeping the local ecotypes alive according to the aims pursued by the European Union within the framework of the International Conventions.

Another object of the invention is to provide seeds and vegetal tissues ready for the germination and the vegetative development on the sites of use in as many quantities and qualities as enough for performing the interventions.

Still another object of the invention is to keep the vegetable products alive (latency) for years to decades and centuries through the control of the factors of the germination and the following development processes.

According to the invention these objects are accomplished by providing a germ plasm preservation system characterized by a succession of steps as claimed in claim 5.

Briefly, such a system, i.e. a set of techniques, machines and equipment adapted to control light, temperature, humidity and aiming at controlling the germination and the development of seeds and vegetal tissues, is capable of modifying positively the physical-mechanical, biochemical characteristics of the vegetable products (germ plasm). According to the invention, "sites" under controlled atmosphere are used, wherein the control of light, temperature, and humidity, and the presence of inert gases such as N₂ or CO₂ (each controlled as an independent variable of the system) cause the quick germination and the following vegetative development of the germ plasm both in situ and ex situ by acting on the latency, dormancy, and dominance.

The preservation and the increase of the biological diversity is enhanced by preservation activities in situ and ex situ, often complementary to each other.

The first type of preservation (in situ) implies the protection of the environment in which the plants live, the second type of preservation (ex situ) consists of the collection and diffusion of samples representative of the genetic variability.

Further features and advantages of the present invention will be more readily apparent from the following description with reference to the accompanying drawings in which some preferred embodiments of the invention are shown by way of a not limiting example. In the drawings:
Fig. 1 is a front elevation view of an isothermal container with controlled atmosphere;
Fig. 2 is a plan view of the same;
Fig. 3 is a front view of a cryo-humid container with multiple shelves;
Fig. 4 is a side section view of the same container with multiple shelves;
Fig. 5 shows a perspective view of the container with multiple shelves of Figs. 3 and 4;
Fig. 6 is a section view of a storage core in situ;
Fig. 7 is still a section view of a storage core not in situ;
Fig. 8 is a schematic plan view of the whole installation for the preservation in situ and ex situ.

Before continuing and for the sake of clarity it is advisable to define the meaning of some specific terms that are used in the present description.

Biological diversity: general diversity among individuals shown by genotypic differences and displayed by phenotypic differences among the species and, within the species, by differences among individuals.

Epinasty: influence of ethylene on the modification of the development and the differentiation of cells and tissues (abscission of leaves, whitening of chlorophyll, wilting of flowers, rapid growth of stipes, etc.).

Ex situ: outside the taking area (place of origin) of the vegetable products.

Geotropism: influence of gravity on the upward or downward development of the vegetal organs. When a plant is placed horizontally, its roots bend and grow downwards, while the stem bends upward. The bending movements, the so-called geotropism, involve a not uniform distribution of auxin.

Germ plasm or plasmogen: the whole set of the vegetable products such as cells, seeds, somatic embryos, parts of tissues, parts of plants, plants. Gravimorfism: influence of gravity on the shape of the plants.

In situ: within the taking area (place of origin) of the vegetable products.

Site: restricted area defined in length, width, and height (generally 30 cm as a minimum under the walking surface) both in situ and ex situ.

According to the present invention, in order to preserve the endemic germ plasm after choice, selection, and preliminary treatment of the same, there is provided the use of sites under controlled atmosphere, where the control of light, temperature, humidity and the presence of inert gases such as N₂ or CO₂ (each controlled as an independent variable of the system) cause the quick germination and the following vegetative development of the germ plasm both in situ and ex situ.

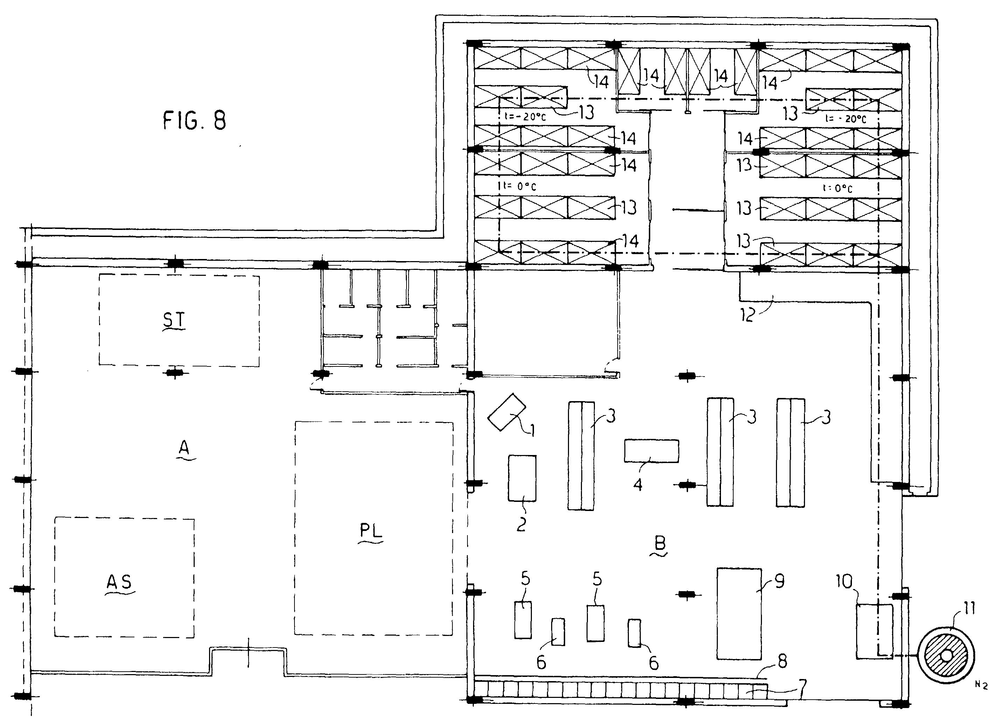

Particularly, after previous choice and selection, that comprises the following steps:
i) Choice, selection, and localization of the taking areas;
ii) Choice, selection, and localization of the plants to be taken;
iii) Collection of the vegetable products;
iv) First manipulation of the germ plasm, seeds and parts of (herbaceous, shrubby, arboreal) plants by methods of visual selection, mechanical selection (floating test, calibration, use of self-cleaning apparatus), phenotypic selection of specific characters and/or genotypic selection of characters aimed at;
the method of the invention is characterised by the following steps:
a) Dehumidification up to 5-7% seed water in ventilated areas and/or environments or in special conditioned areas with 15% air humidity, 20°C temperature, and residence time generally of 4 to 6 weeks; this allows the vegetable products to be put under latency conditions and makes the germination difficult;
b) Control and check of the C.W.U. (Cold and Warm Unit) corresponding to the minimum calories and refrigeration units per unit time which are necessary for interrupting the dormancy even with suitable tests of germination and growth ("Propagazione per seme di alberi e arbusti della flora mediterranea", AA. VV - Comitato per la lotta alla desertificazione, March 2001; "Semi di laifglie forestali", B. Suszka, C. Miller, M. Bonnet Masimbert, INRA - Edagricole, 2000);
c) Treatment, if necessary, with microbial and/or fungine (mychorrhiza) pabulum (inoculum) aiming at enhancing the peculiarity of the endemisms which are the object of manipulation, as well as treatment, if necessary, with specific chemical products (curing);
d) First preservation:
   1) in lots and relative homogeneous batches in isothermal containers with controlled atmosphere, i.e. with controlled light, atmosphere (N₂ - 196°C, CO₂), humidity, with a capacity of a few litres to some cubic metres, in situ and ex situ, taking care of gradually lowering temperature and humidity to avoid thermal shocks and damages of the tissues;
   2) in lots and relative homogeneous batches in cryo-humid containers with controlled light and temperature, in situ and ex situ, taking care of gradually lowering temperature and humidity to avoid thermal shocks and damages of the tissues; for the long-term preservation the chamber is held at -20°C and the pre-chamber at 0°C, while for the short-term preservation a chamber at a temperature between 0°C and +5°C and 30% relative air humidity is used;
   3) in lots and relative homogeneous batches in natural storage cores under a specific, possibly endemic substrate, naturally controlling temperature, light and humidity, in situ and ex situ;
e) Control and check of any other additional treatment referring to step a);
f) Any intensive multiplication of the germ plasm in areas of forced growth and/or in laboratory:
   1) reproduction, growth and direct development of seeds and/or somatic embryos;
   2) development and growth of vegetal explants;
   3) multiplication of the cells and relative tissue growth;
g) storage of the germ plasm (final preservation) in lots and homogeneous batches into suitable containers with a capacity of 10-20 grams to 200-500 grams seeds and over to large cubic containers with a capacity of 2-5 kg to 10 kg seeds which are transpiring, biodegradable, made of plastics, aluminium (also consisting of envelopes of plastics with embodied aluminium foil), in stationary or mobile storage cores (stationary or mobile seed banks), in situ and ex situ. Referring now to the figures, Fig. 8 shows a preferred installation for carrying out the method of preserving endemic germ plasm described above.

Such installation can be considered as essentially divided into three different sectors A, B, and C.

Sector A is reserved to the first operations to be carried out on the input products and has an assembling area AS, a storage area ST, and an area PL for the first treatment of the starting materials.

After sector A, sector B includes the machines and the equipments that can be used for the processing of germ plasm, such as lift trucks 1, vibrating screens 2, belt conveyers 3, moving essence mixers 4, moving trolleys 5 for containing the essences, moving scales 6, and kneading machines and mixers 9 and 10.

At one end of sector B there are a number of storage bins 7 for storing essences that are connected to one another by a horizontal screw feeder 8.

The third sector C is the most internal sector, where refrigerating rooms 17 having differentiated temperatures contain both shelves 13 on which the mobile isothermal bins 15 are stored for the first conservation and rack containers 14 with controlled light and temperature. The whole is connected to an outside silo 11 by conveyer means.

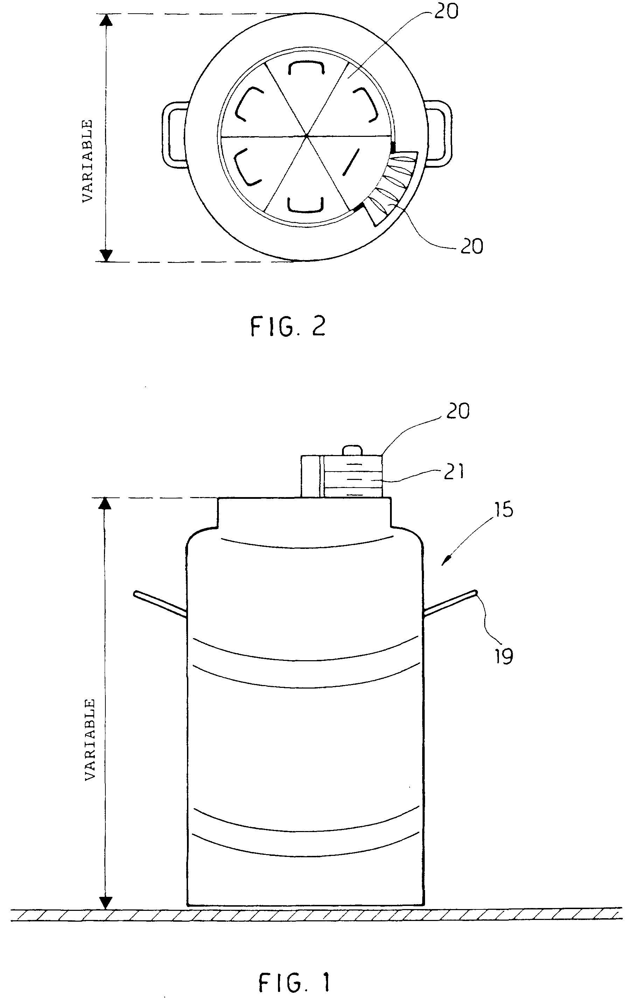

A moving isothermal bin 15 is shown in detail in Figs. 1 and 2.

As can be seen, it is essentially formed by a cylindrical metal container with varying diameter and height which is provided with two sturdy handles 19 and the interior of which is thermally insulated and placed under controlled atmosphere and contains a plurality of extractable partitions 20 introduced from the top, each of them being divided along their height into a plurality of horizontal shelves or drawers 21 extractable in turn on their respective planes.

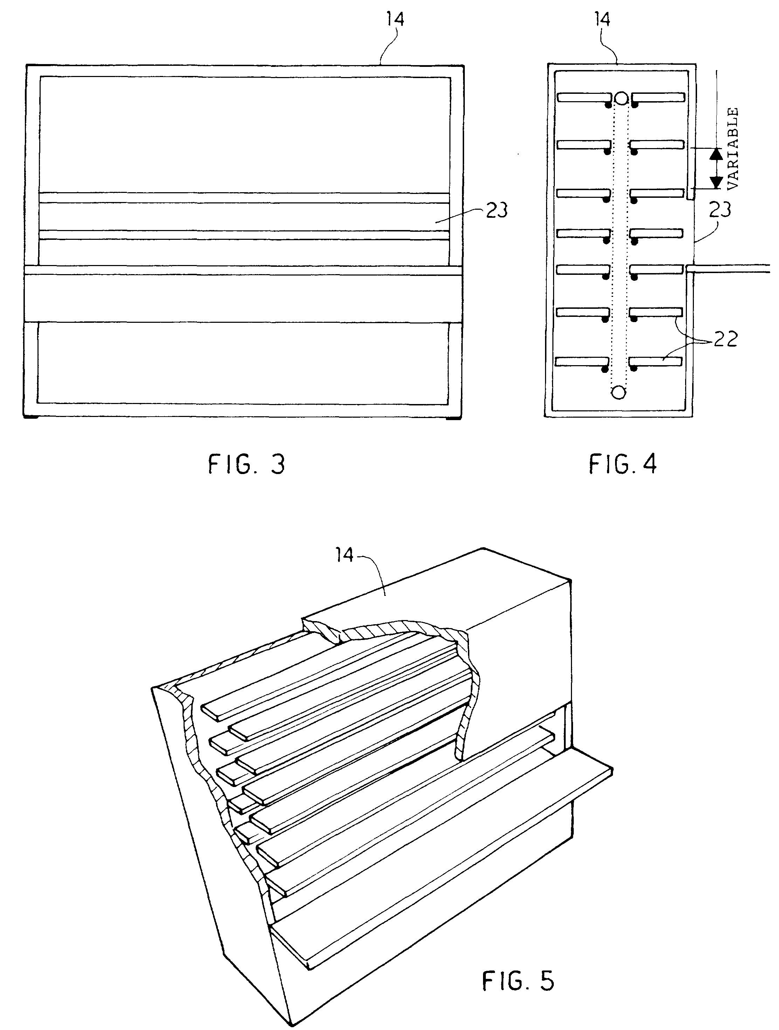

A rack container 14 which can be used for the first preservation, as illustrated at item 2) of step d), is shown in Figs. 3 to 5. It is essentially characterized by the provision of a plurality of horizontal shelves 22 appropriately spaced apart from each other which are rotated by means of a turntable or the like so that each shelf can move to the input opening 23.

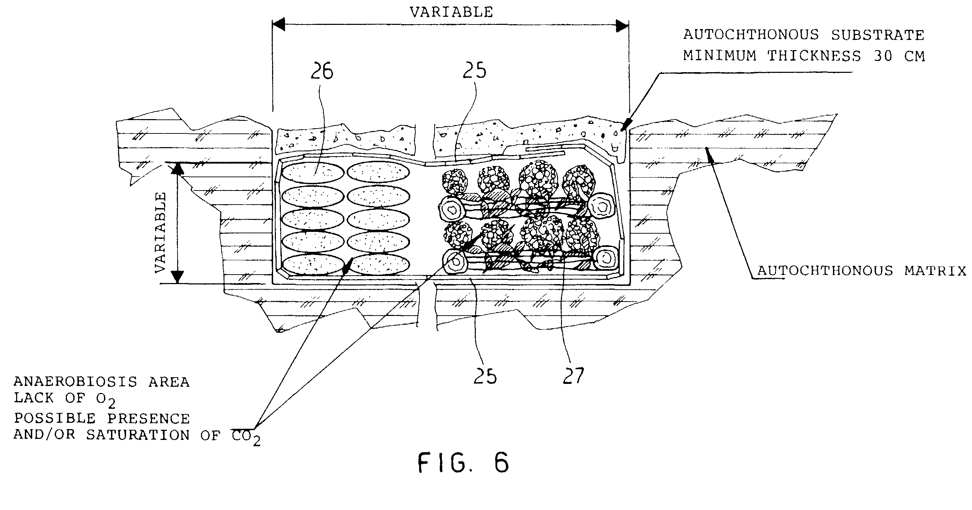

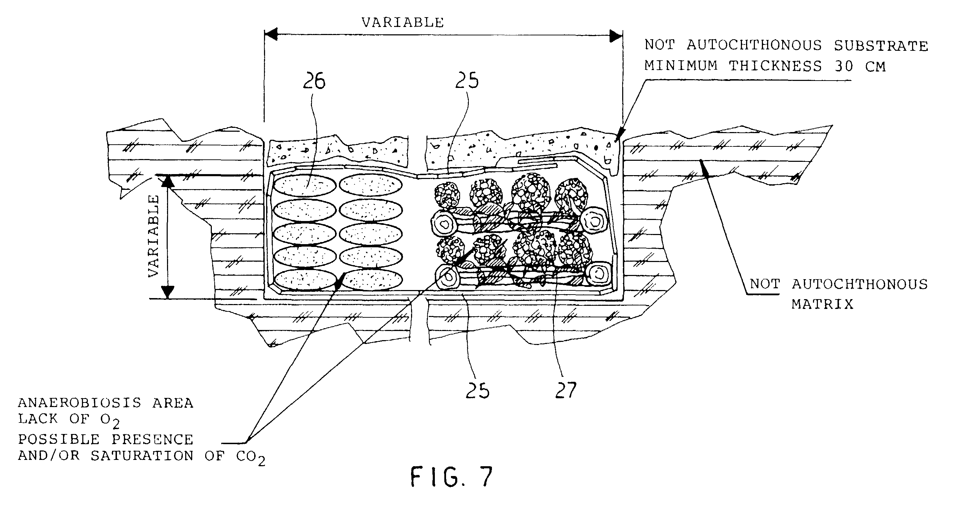

A preferred embodiment of the natural storage cores of item 3) of step d) is shown in Figs. 6 and 7. These figures show a storage core 24 buried under a specific substrate and essentially formed by a protection strip of biodegradable materials such as jute, hemp or coir bags allowing gas exchanges. Bags of seeds 26 and parts of plants 27 may be stored in such a strip.

As can be easily seen, the two Figures 6 and 7 differ only by the fact that in one case the matrix and the substrate are autochthonous, and in the other case not autochthonous. The different hatching used shows such a difference.

It should be noted that there is no oxygen within the storage core but only a possible presence of carbon dioxide even at saturation level.

A preferred embodiment of the invention has been described, however, it is self-evident that a number of changes and modifications can be made by those skilled in the art without departing from the scope of the present invention as defined in the appended claims.

## Claims

1. A method for preserving endemic germ plasm, **characterized by** the following steps:
a) Dehumidification of seeds in order to reduce water content up to 4-10% in ventilated areas with 10-20% air humidity, at a temperature of 18-22°C, for 4 to 6 weeks;
b) Control and check of the C.W.U. (Cold and Warm Unit);
c) Treatment with microbial and/or fungine (mychorrhiza) pabulum inoculum and/or with specific chemical products (curing);
d) First preservation:
1) in isothermal containers with controlled light, atmosphere (N₂ - 196°C, CO₂) and humidity;
2) in cryo-humid containers with controlled light at a temperature of -20° C for long-term conservation, in situ and ex situ, at a temperature of 0,5-5 °C and 30% humidity for short-term conservation;
3) in natural storage cores under a specific, possibly endemic substrate, controlling temperature, light and humidity, in situ and ex situ;
e) additional treatment of dehumidification;
f) intensive multiplication of the germ plasm in areas of forced growth and/or in laboratory:
1) reproduction, growth and direct development of seeds and/or somatic embryos;
2) development and growth of vegetal explants;
3) multiplication of the cells and relative tissue growth;
g) final preservation: storage of the germ plasm in containers, with a capacity of 10-20 gr to 200-500 gr, and/or stationary or mobile storage cores, with a capacity of 2-5 Kg to 10 Kg, such as stationary or mobile seed banks, in situ and ex situ.

2. The method of claim 1, **characterized in that** in step a) the dehumidification is carried out in order to reduce seeds' water content up to 5-7% in ventilated areas and/or environments with 15% air humidity, at a temperature of 20°C, for 4 to 6 weeks.

3. The method of claim 1, **characterized in that** in step g) containers are made of plastics or aluminium or consist of envelopes of plastics with embodied aluminium foil.

4. The method of claim 1, **characterized in that** in step d) storage cores are formed by a protection strip of biodegradable materials such as jute, hemp or coir bags allowing gas exchanges and wrapping the stored essences in the form of seed bags and/or the parts of the plants.

5. The method of claim 4, **characterized in that** storage cores are buried under a substrate of at least 30 cm thickness.

6. The method of claim 5, **characterized in that** in step d) isothermal containers are cylindrical containers provided in their inside with means for controlling the atmosphere and containing a plurality of extractable drawers in the form of partitions.

## Revendications

1. Procédé de préservation d'un plasme germinatif endémique, **caractérisé par** les étapes suivantes:
a) une déshumidification des semences afin de réduire la teneur en eau jusqu'à 4-10% dans des zones ventilées présentant une humidité de l'air de 10-20%, à une température de 18-22°C, pendant 4 à 6 semaines;
b) un contrôle et une vérification de la C.W.U. (Unité de froid et chaud);
c) un traitement avec un inoculum de nourriture microbienne et/ou fongique (mychorrhiza) et/ou avec des produits chimiques spécifiques (cuisson);
d) une première préservation:
1) dans des récipients isothermes présentant une lumière, une atmosphère (N₂ - 196°C, CO₂) et une humidité contrôlées;
2) dans des récipients humides aux températures cryogéniques présentant une lumière contrôlée à une température de -20°C pour une conservation à long terme, in situ et ex situ, à une température de 0,5-5°C et une humidité de 30% pour une conservation à court terme;
3) dans des noyaux naturels de stockage sous un substrat spécifique, pouvant être endémique, en contrôlant la température, la lumière et l'humidité, in situ et ex situ;
e) un traitement supplémentaire de déshumidification;
f) une multiplication intensive du plasme germinatif dans des zones de croissance forcée et/ou en laboratoire:
1) reproduction, croissance et développement direct de semences et/ou d'embryons somatiques;
2)développement et croissance d'explants végétaux;
3) multiplication des cellules et croissance relative des tissus;
g) une préservation finale: stockage du plasme germinatif dans des récipients, présentant une capacité de 10-20 g jusqu'à 200-500 g, et/ou dans des noyaux de stockage stationnaires ou mobiles, présentant une capacité de 2-5 kg jusqu'à 10 kg, tels que des banques de semences stationnaires ou mobiles, in situ et ex situ.

2. Procédé selon la revendication 1, **caractérisé en ce que**, à l'étape a) on effectue la déshumidification afin de réduire la teneur en eau des semences jusqu'à 5-7% dans des zones et/ou des environnements ventilés présentant une humidité de l'air de 15%, à une température de 20°C, pendant 4 à 6 semaines.

3. Procédé selon la revendication 1, **caractérisé en ce que**, à l'étape g) les récipients sont fabriqués en des matières plastiques ou en aluminium ou se composent d'enveloppes de matières plastiques présentant une feuille d'aluminium intégrée.

4. Procédé selon la revendication 1, **caractérisé en ce que**, à l'étape d) les noyaux de stockage sont formés d'une bande de protection d'un matériau biodégradable tel que des sacs de jute, de chanvre ou de fibre de coco permettant des échanges gazeux et emballant les essences stockées sous la forme de sacs de semences et/ou les parties des plantes.

5. Procédé selon la revendication 4, **caractérisé en ce que** l'on enfouit les noyaux de stockage sous un substrat d'au moins 30 cm d'épaisseur.

6. Procédé selon la revendication 5, **caractérisé en ce que**, à l'étape d) les récipients isothermes sont des récipients cylindriques dont on munit l'intérieur avec des moyens pour contrôler l'atmosphère et contenant une pluralité de tiroirs extractibles sous la forme de cloisons.

## Patentansprüche

1. Verfahren zum Konservieren von endemischem Keimplasma, **gekennzeichnet durch** die folgenden Schritte:
a) Entfeuchtung von Saatgut, um den Wassergehalt um bis zu 4-10% in belüfteten Bereichen mit 10-20% Luftfeuchtigkeit bei einer Temperatur von 18-22°C für 4 bis 6 Wochen zu reduzieren;
b) Steuerung und Prüfung der C.W.U. (Kalt- und Warm-Einheit);
c) Behandlung mit mikrobiellem und/oder funginem (Mychorrhiza) Pabolum Inoculum und/oder mit bestimmten chemischen Produkten (aushärtend);
d) Erste Konservierung:
1) in isothermen Behältern bei geregeltem Licht, Klima (N₂ - 196°C, CO₂) und Feuchtigkeit;
2) in kühl-feuchten Behältern mit geregeltem Licht bei einer Temperatur von -20°C zur Langzeitkonservierung, in situ und ex situ, bei einer Temperatur von 0,5-5°C und 30% Feuchtigkeit zur Kurzzeitkonservierung;
3) in natürlichen Speicherkernen unter einem bestimmten, möglicherweise endemischen Substrat, wobei Temperatur, Licht und Feuchtigkeit in situ und ex situ geregelt werden;
e) zusätzliche Entfeuchtungsbehandlung;
f) intensive Vermehrung des Keimplasmas in Bereichen mit Zwangswachstum und/oder im Labor:
1) Vermehrung, Wachstum und direkte Entwicklung von Saatgut und/oder somatischen Embryonen;
2) Entwicklung und Wachstum von pflanzlichen Explantaten;
3) Zellvermehrung und relatives Gewebewachstum;
g) Schlusskonservierung:
Lagerung des Keimplasmas in Behältern mit einem Fassungsvermögen von 10-20 gr bis 200-500 gr, und/oder in stationären oder mobilen Speicherkernen mit einem Fassungsvermögen von 2-5 kg bis zu 10 kg, wie stationäre oder mobile Saatbanken, in situ und ex situ.

2. Verfahren nach Anspruch 1, **dadurch gekennzeichnet, dass** in Schritt a) die Entfeuchtung durchgeführt wird, um den Wassergehalt des Saatguts um bis zu 5-7% in belüfteten Bereichen und/oder in Umgebungen mit 15% Luftfeuchtigkeit bei einer Temperatur von 20°C für 4 bis 6 Wochen zu reduzieren.

3. Verfahren nach Anspruch 1, **dadurch gekennzeichnet, dass** in Schritt g) die Behälter aus Kunststoff oder Aluminium hergestellt sind oder aus Kunststoffumschlägen mit darin enthaltener Aluminiumfolie bestehen.

4. Verfahren nach Anspruch 1, **dadurch gekennzeichnet, dass** in Schritt d) die Speicherkerne durch einen Schutzstreifen aus biologisch abbaubarem Material wie Jute-, Hanf- oder Kokosfaserbeuteln gebildet werden, die einen Gasaustausch zulassen und die gespeicherten Essenzen in Form von Samenbeuteln und/oder Pflanzenteilen einwickeln.

5. Verfahren nach Anspruch 4, **dadurch gekennzeichnet, dass** die Speicherkerne unter einem Substrat von mindestens 30 cm Dicke begraben werden.

6. Verfahren nach Anspruch 5, **dadurch gekennzeichnet, dass** in Schritt d) die isothermen Behälter zylindrische Behälter sind, die im Inneren Mittel zur Klimasteuerung aufweisen und eine Vielzahl von ausziehbaren Schubladen in Form von Fächern enthalten.
